# EUROPÄISCHE PATENTSCHRIFT

(11) **EP 3 954 927 B1**
(45) Veröffentlichungstag und Bekanntmachung des Hinweises auf die Patenterteilung: **04.10.2023**
(21) Anmeldenummer: 21189350.8
(22) Anmeldetag: 03.08.2021
(51) Int. Cl.: F16K 3/02, F16K 27/04, F16K 11/20, F16K 11/22, C10B 1/04, C10B 25/10, C10B 55/00, C10B 31/12

(54) **ABSPERRVENTIL, VERKOKUNGSTROMMEL UND VERFAHREN**
SHUT-OFF VALVE, CARBONIZATION DRUM AND METHOD
ROBINET D'ARRÊT, TAMBOUR DE COKÉFACTION ET PROCÉDÉ

(30) Priorität: 13.08.2020 DE 102020121349
(43) Veröffentlichungstag der Anmeldung: 16.02.2022
(73) Patentinhaber: Z & J Technologies GmbH, 52355 Düren (DE)
(72) Erfinder: Baum, Elke, 52249 Eschweiler (DE)
(74) Vertreter: Meissner Bolte Partnerschaft mbB

(56) Entgegenhaltungen:
- GB-A- 1 204 069
- US-A- 992 027
- US-A- 1 788 763
- US-A- 2 871 170
- US-A- 5 148 829
- US-A1- 2003 127 314
- US-A1- 2007 108 036

## Beschreibung

Die Erfindung betrifft ein Absperrventil für eine Verkokungstrommel, eine Verkokungstrommel mit einem derartigen Absperrventil und ein Verfahren zum Herstellen von Koks in einer Verkokungstrommel, die mit einem derartigen Absperrventil verbunden ist.

Die Herstellung von Koks erfolgt hauptsächlich durch ein Verfahren, das als Delayed Coken bekannt ist. Dabei wird ein Einsatzprodukt, beispielsweise Rohöl oder Rückstände aus der Vakuumdestillation, in einem Ofen bei Drücken von etwa 30 bar auf etwa 500 °C erwärmt und dann mit hoher Geschwindigkeit in eine mit dem Ofen fluidverbundene Verkokungskammer bzw. Verkokungstrommel eingeleitet. Dort verkokt das Einsatzprodukt bei ca. 4 bar. Für eine optimale Befüllung der Verkokungstrommel ist es wünschenswert, dass das Einsatzprodukt zentral, also in etwa mittig bezogen auf den Durchmesser der Verkokungstrommel eingeleitet wird. Zum Entleeren der Verkokungstrommel muss dieser Bereich allerdings freigehalten werden, um den Koks aus der Verkokungstrommel entnehmen und gegebenenfalls ein Schneidwerkzeug einführen zu können.

DE 10 2012 101 015 A1, die auf die Anmelderin zurückgeht, löst dieses Problem dadurch, dass das Schieberventil, das die Verkokungstrommel bodenseitige verschließt, mit einer Rohrleitung ausgestattet ist, durch die das Einsatzprodukt mittig in die Verkokungstrommel eingeleitet werden kann. Beim Entleeren der Verkokungstrommel wird das Schieberventil zusammen mit der Rohrleitung in die Offenstellung verfahren, so dass der Koks problemlos entnommen werden kann. Diese Technologie funktioniert hervorragend, erfordert aber einen gewissen konstruktiven Aufwand und entsprechende Kosten bei der Herstellung des Schiebers.

US 2007/108036 A1 offenbart eine Verkokungstrommel mit einer Zufuhrleitung zum Befüllen der Verkokungstrommel mit einem Medium, d.h. dem Einsatzprodukt, wobei die Zufuhrleitung in Bodennähe zentral in die Verkokungstrommel mündet. Die Verkokungstrommel weist eine bodenseitige Öffnung auf, die durch ein erstes Verschlussmittel geöffnet und verschlossen werden kann. Unter dem ersten Verschlussmittel ist ein Rohrstutzen angeordnet, der das erste Verschlussmittel mit einem zweiten Verschlussmittel verbindet. Der Rohrstutzen umfasst einen Gasanschluss, um Kohlenwasserstoffdampf aus der Verkokungstrommel dem Koks zuzuführen, der beim Entleeren der Verkokungstrommel durch den Rohrstutzen geleitet wird. Auf diese Weise wird der entnommene Koks von flüchtigem Kohlenwasserstoff befreit. Darüber hinaus wirkt der Kohlenwasserstoffdampf auch als Druckgas, um den entnommenen Koks weiterzuleiten. Nachteil eines solchen Systems ist, dass die zentral angeordnete Zufuhrleitung der Verkokungstrommel die Koksentnahme erschwert und das Einführen von Schneidwerkzeug behindert.

Aus US 992 027 A ist ein System zum Kochen, Zerkleinern und Umwandeln von Abfällen verschiedenster Art. Das System umfasst eine Presse und einen Druckbehälter, die durch einen Rohrstutzen miteinander verbunden sind, der durch zwei manuell betriebene Schiebeventile geöffnet und verschlossen werden kann. US 2 871 170 A beschreibt eine Anlage zur Gewinnung von Öl oder Gas aus ölhaltigen Feststoffen, wobei die Anlage durch zwei plattenförmige Schieberelemente verschließbar ist, um die Feststoffe in der Anlage zu halten. Aus US 1 788 763 A ist ein Schieberelement bekannt, bei dem mittels zweier übereinanderliegender Scheiben, die jeweils eine Durchgangsöffnung umfassen, sodass eine variable Durchgangsfläche erzielt werden kann. GB 1 204 069 A beschreibt einen Plattenschieber mit einer Durchgangsöffnung, deren Durchtrittsfläche mittels zweier Schieberelementen in ihrer Größe verstellbar ist. US 5 148 829 A offenbart einen Plattenschieber mit zwei unterschiedlich großen kreisförmigen Durchgangsöffnungen. Der Erfindung liegt die Aufgabe zugrunde, das eingangs genannte Absperrventil dahingehend zu verbessern, dass das zentrale Befüllen der Verkokungstrommel mit einem Medium bei einem möglichst einfachen Aufbau der Armatur möglich ist. Der Erfindung liegt ferner die Aufgabe zugrunde, eine Verkokungstrommel mit einem derartigen Absperrventil sowie ein Verfahren anzugeben, bei dem die Verkokungstrommel mit einem derartigen Absperrventil verbunden ist.

Erfindungsgemäß wird diese Aufgabe mit Blick auf das Absperrventil durch den Gegenstand des Anspruchs 1, mit Blick auf die Verkokungstrommel durch den Gegenstand des Anspruchs 14 mit Blick auf das Verfahren durch den Gegenstand des Anspruchs 15 gelöst.

Konkret wird die Aufgabe durch ein Absperrventil, insbesondere Rohrbrückenschieber, für eine Verkokungstrommel zur Herstellung von Koks mit einem ersten Verschlussmittel zum Öffnen und Verschließen der Verkokungstrommel und mit wenigstens einem Rohrstutzen gelöst. Der Rohrstutzen weist ein erstes Ende zur Verbindung mit der Verkokungstrommel und ein zweites Ende auf, an dem das erste Verschlussmittel angeordnet ist. Der Rohrstutzen weist einen Zufuhranschluss zum Befüllen der Verkokungstrommel mit einem Medium und ein zweites Verschlussmittel auf. Das zweite Verschlussmittel ist zwischen dem Zufuhranschluss und dem ersten Ende des Rohrstutzens angeordnet und kann in eine Befüllstellung und in eine Entleerungsstellung bewegt werden. Das erste Verschlussmittel ist ein Schieber. Das zweite Verschlussmittel ist eine Blende. In der Befüllstellung ist eine Blendenöffnung im Bereich der Mittellängsachse des Rohrstutzens zur zentralen Einleitung des Mediums in die Verkokungstrommel angeordnet. In der Entleerungsstellung weist die Blendenöffnung eine größere Durchtrittsfläche als in der Befüllstellung auf.

Die Erfindung hat den Vorteil, dass die Blende eine zentrale Befüllung der Verkokungstrommel erlaubt, ohne dabei den Entleerungsvorgang zu behindern. Dazu weist der Rohrstutzen eine Blende mit einer Blendenöffnung auf, deren Größe veränderbar ist. Konkret ist die Blende in eine Befüllstellung und in eine Entleerungsstellung bewegbar. In der Befüllstellung ist die Blendenöffnung im Bereich der Mittellängsachse des Rohrstutzens angeordnet. Dadurch wird erreicht, dass das Medium, das durch die Blende beim Befüllen hindurch tritt, zentral der Verkokungstrommel zugeführt wird. Die fluchtende Anordnung zwischen dem Rohrstutzen und der Verkokungstrommel ergibt sich dadurch, dass die Verkokungstrommel am ersten Ende des Rohrstutzens angebracht, insbesondere angeflanscht ist. Zugleich ermöglicht die Blende ein problemloses Entleeren in der Verkokungstrommel, weil die Blende aus der Befüllstellung in eine Entleerungsstellung bewegt werden kann. Da die Durchtrittsfläche der Blendenöffnung in der Entleerungsstellung größer als in der Befüllstellung ist, wird der Zugang zur Verkokungstrommel durch das Absperrventil freigegeben.

Dazu kann in an sich bekannter Weise der Schieber des Absperrventils in die Offenstellung bewegt werden, wodurch der Rohrstutzen freigegeben wird. Der Koks kann der Verkokungstrommel entnommen werden. Es ist auch möglich, dass ein Schneidwerkzeug durch das Absperrventil und die in der Entleerungsstellung befindliche Blende in die Verkokungstrommel, eingebracht wird.

Es versteht sich, dass die Blende so ausgebildet ist, dass diese bis auf die Blendenöffnung die Querschnittsfläche des Rohrstutzens überdeckt. Mit anderen Worten schließt die Blende den Rohrstutzen ab und lässt die Querschnittsfläche des Rohrstutzens nur im Bereich der Blendenöffnung frei. Die Form der Blende kann an die Querschnittsfläche des Rohrstutzens angepasst sein. Wenn beispielsweise der Rohrstutzen rund ist, hat auch die Blende einen runden Umfang. Dies ist aber nicht zwingend erforderlich, solange die Blende so groß ist, dass diese die Querschnittsfläche des Rohrstutzens abdecken kann.

Wenn die Blende in einer nachstehend näher beschriebenen Ausführungsform vollständig geschlossen ist, überdeckt diese die gesamte Querschnittsfläche des Rohrstutzens.

Bevorzugte Ausführungsformen der Erfindung sind in den Unteransprüchen angegeben.

So kann der Zufuhranschluss in einer Wand des Rohrstutzens angeordnet sein und in einen Raum des Rohrstutzens zwischen dem Schieber und der Blende münden. Dies hat den Vorteil, dass die Zuführung des Mediums über den Rohrstutzen in die Verkokungstrommel konstruktiv einfach möglich ist. Die Verrohrung des Schiebers zum Öffnen und Verschließen der Verkokungstrommel entfällt.

Bei einer besonders bevorzugten Ausführungsform umfasst die Blende ein Schieberventil mit einer geteilten Schieberplatte. Die Teilplatten der geteilten Schieberplatte sind in entgegengesetzten Richtungen bewegbar. In der Befüllstellung bilden die Teilplatten die Blendenöffnung im Bereich der Mittellängsachse zur zentralen Einleitung des Mediums in die Verkokungstrommel. Die Ausgestaltung der Blende als Schieberventil mit geteilter Schieberplatte ist einfach und robust. Die in entgegengesetzten Richtungen bewegbaren Teilplatten ermöglichen ein einfaches Verfahren der Blende in die Befüllstellung und in die Entleerungsstellung. Dabei ist der Verfahrweg der Teilplatten so eingestellt, dass diese in der Befüllstellung im Bereich der Mittellängsachse die Blendenöffnung bilden, sodass das Medium zentral in die Verkokungstrommel eingeführt werden kann.

Es ist nicht ausgeschlossen - das gilt generell für die Erfindung -, dass die Blende vollständig geschlossen wird, beispielsweise um beim Befüllen mit dem Medium Druck aufzubauen. In diesem Fall ist die Blende zusätzlich zur Befüllstellung und zur Entleerungsstellung in eine weitere Stellung bewegbar, nämlich in eine Schließstellung.

Zweckmäßigerweise ist jede Teilplatten mit einer Schieberstange verbunden, um die Teilplatten in entgegengesetzte Richtungen zu bewegen. Der Antrieb der Schieberstange kann auf verschiedene Weise erfolgen, beispielsweise elektrisch, hydraulisch, mechanisch oder pneumatisch. Es ist möglich, auf dieselbe Antriebsart zurückzugreifen, wie für den Schieber. Dies ist aber nicht zwingend erforderlich.

Die Teilplatten können Innenkanten aufweisen, die in der Befüllstellung die Blendenöffnung bilden. Die Innenkanten begrenzen einerseits die jeweilige Teilplatte und andererseits in der Befüllstellung die Blendenöffnung. Die Teilplatten sind einander gegenüber angeordnet.

Die Innenkanten können gegen Verschleiß geschützt sein. Dies ist aber nicht zwingend erforderlich.

Bei einer Ausführungsform sind die Innenkanten gerade ausgebildet und bilden in der Befüllstellung eine spaltförmige Blendenöffnung. Diese Ausführungsform ist einfach zu realisieren.

Bei einer weiteren Ausführungsform sind wenigstens eine der Innenkanten, insbesondere beide Innenkanten profiliert ausgebildet und bilden in der Befüllstellung eine zumindest abschnittsweise gekrümmte Blendenöffnung. Diese Ausführungsform hat den Vorteil, dass die Blendenöffnung auf einen vergleichsweise kleinen lokalen Bereich der Querschnittsfläche des Rohrstutzens beschränkt ist, sodass die zentrale Zufuhr des Mediums auf einen Bereich rund um die Mittellängsachse des Rohrstutzens konzentriert ist. Mit dieser Ausführungsform lässt sich besonders gut der Vorteil erreichen, dass das Medium zentral in die Verkokungstrommel eingeleitet wird. Es ist dabei nicht zwingend notwendig, dass die Blendenöffnung vollständig gekrümmt ist. Beispielsweise kann eine Innenkante gerade und die andere Innenkante gekrümmt sein. Es ist auch möglich, dass beide Innenkanten gekrümmt sind, sodass sich eine Blendenöffnung mit vollständig gekrümmtem Umfang, beispielsweise eine ovale oder kreisförmige Blendenöffnung ergibt.

Bei einer weiteren bevorzugten Ausführungsform bildet die Blendenöffnung in der Befüllstellung einen geschlossenen Umfang. Die Blendenöffnung ist also vollständig von den Innenkanten bzw. den profilierten Bereichen der in den Kanten (Krümmung) umgeben und begrenzt. Dies hat den Vorteil, dass das Medium vollständig auf den Bereich rund um die Mittellängsachse konzentriert ist. Im Fall der geteilten Schieberplatte bedeutet dies, dass die Teilplatten in der Befüllstellung so aufeinander zu bewegt bzw. so positioniert sind, dass diese eine vollständig geschlossene Blendenöffnung bilden.

Vorzugsweise bilden wenigstens eine, insbesondere beide Innenkanten jeweils eine konkave Ausnehmung. Die beiden konkaven Ausnehmungen begrenzen in der Befüllstellung zusammen die Blendenöffnung.

Vorzugsweise sind die Teilplatten im Bereich der Innenkanten übereinander bewegbar. Diese Ausführungsform hat insbesondere bei den profilierten Innenkanten den Vorteil, dass die Querschnittsfläche der Blendenöffnung veränderbar ist, sodass der Volumenstrom des Mediums beim Befüllen der Verkokungstrommel geregelt werden kann.

Generell kann der Volumenstrom des Mediums beim Befüllen der Verkokungstrommel durch Verändern der Blendenöffnung regelbar sein. Hierfür sind auch andere Möglichkeiten denkbar als die vorstehend beschriebene Änderung der Querschnittsfläche durch Übereinanderbewegen der Innenkanten.

Bei einer weiteren bevorzugten Ausführungsform entspricht die Durchtrittsfläche der Blendenöffnung beim Entleeren der Verkokungstrommel im Wesentlichen der gesamten Durchtrittsfläche des Rohrstutzens. Dies hat den Vorteil, dass praktisch die gesamte Durchtrittsfläche des Rohrstutzens für die Koksentnahme nutzbar ist.

Eine besonders einfache und gleichzeitig robuste Ausführungsform wird erreicht, wenn die Blende eine Platte mit wenigstens einer ersten und zweiten Blendenöffnung bildet, die in die Befüllstellung und in die Entleerungsstellung bewegbar ist. In der Befüllstellung ist die erste Blendenöffnung im Bereich der Mittellängsachse des Rohrstutzens zur zentralen Einleitung des Mediums in die Verkokungstrommel angeordnet. In der Entleerungsstellung ist die zweite Blendenöffnung im Bereich der Mittellängsachse des Rohrstutzens zur Entleerung der Verkokungstrommel angeordnet. Die zweite Blendenöffnung weist eine größere Durchtrittsfläche als die erste Blendenöffnung auf.

Demnach kann die Änderung der Durchtrittsfläche der Blende nicht nur durch eine Veränderung des Blendendurchmessers, sondern auch durch wenigstens 2 Blendenöffnungen erreicht werden, die beispielsweise in einer Platte oder in einem Rahmen ausgebildet sind. Die jeweilige Blendenöffnung wird durch Verschieben der Platte bzw. des Rahmens im Rohrstutzen aktiviert. Dazu wird der Mittelpunkt der jeweiligen Blendenöffnung in den Bereich der Mittellängsachse bzw. in etwa auf die Mittellängsachse bewegt. Zum Befüllen der Verkokungstrommel wird die kleinere der beiden Blendenöffnungen in den Bereich der Mittellängsachse bewegt. Zum Entleeren der Verkokungstrommel wird die größere der beiden Blendenöffnungen in den Bereich der Mittellängsachse bewegt.

Im Rahmen der Erfindung wird das Absperrventil für sich genommen, d. h. ohne die Verkokungstrommel beansprucht. Zusätzlich wird das Absperrventil auch im Zusammenhang mit der Verkokungstrommel offenbart und beansprucht, wie im nebengeordneten Anspruch 14 angegeben ist.

Bei dem Verfahren zur Herstellung von Koks in einer Verkokungstrommel ist diese mit dem erfindungsgemäßen Absperrventil verbunden. Bei dem Verfahren wird zum Befüllen der Verkokungstrommel mit einem Medium die Blende in die Befüllstellung bewegt. Durch den Zufuhranschluss wird das Medium in den Rohrstutzen eingespeist. Durch die Blende wird das Medium von dort in die Verkokungstrommel eingeführt und zwar zentral bezogen auf die Verkokungstrommel.

Vorzugsweise wird bei dem Verfahren der Volumenstrom des Mediums in die Verkokungstrommel durch die Blende verändert. Zum Entleeren der Verkokungstrommel wird die Blende in die Entleerungsstellung bewegt.

Die Erfindung wird nachstehend anhand von Ausführungsbeispielen unter Bezugnahme auf die beigefügten schematischen Zeichnungen näher mit weiteren Einzelheiten erläutert.

In diesen zeigen
- Fig. 1: den Schnitt eines Absperrventils nach einem erfindungsgemäßen Ausführungsbeispiel, das mit einer Verkokungstrommel verbunden ist;
- Fig. 2: die Draufsicht auf eine Blende mit profilierten Teilplatten;
- Fig. 3: den Schnitt einer Blende mit übereinander angeordneten Teilplatten;
- Fig. 4: den Schnitt einer Blende mit gabelförmigen Teilplatten und
- Fig. 5: die Draufsicht auf eine Blende mit durchgehender Platte und 2 Blendenöffnungen.

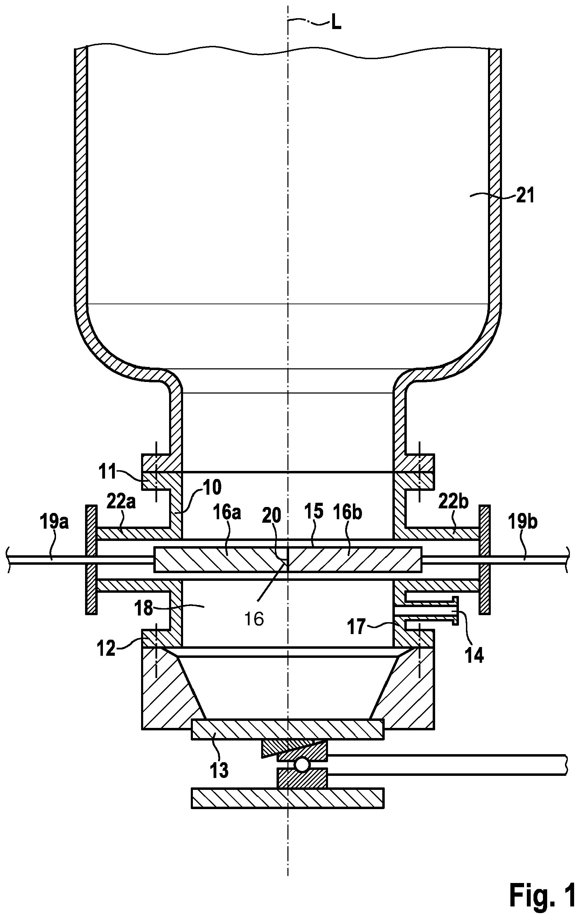

Das in Fig. 1 gezeigte Absperrventil ist mit einer Verkokungstrommel 21 bzw. Verkokungskammer verbunden. Das Absperrventil wird sowohl für sich, also ohne Verkokungstrommel 21, als auch im eingebauten Zustand mit Verkokungstrommel 21, offenbart und beansprucht. Wie in Fig. 1 gezeigt, ist die Ausgangsöffnung der Verkokungstrommel 21 mit einem ersten Ende des Rohrstutzens 10 des Absperrventils verbunden, insbesondere verschraubt. Das zweite Ende 12 des Rohrstutzens 10 ist mit einem Schieber 13 verbunden, der zum Öffnen und Verschließen der Verkokungstrommel 21 vorgesehen ist. Der üblicherweise auf der anderen Seite des Schiebers 13 vorgesehene weitere Rohrstutzen ist nicht dargestellt.

Wie in Fig. 1 gezeigt, ist das erste Ende 11 des Rohrstutzens 10 im eingebauten Zustand in vertikaler Richtung oben und das zweite Ende 12 unten angeordnet.

Der Rohrstutzen 10 ist zylindrisch. Andere Querschnittsformen sind möglich.

In die Verkokungstrommel und das Absperrventil fluchten in eine Richtung entlang der Mittellängsachse L, die in Längsrichtung mittig bzw. zentral durch die Verkokungstrommel 21 und den Rohrstutzen 10 verläuft.

Das Absperrventil gemäß Fig. 1 ist als Rohrbrückenschieber ausgebildet. Der Schieber 13 des Absperrventils ist als Doppelplattenschieber ausgebildet. Derartige Doppelplattenschieber sind bekannt. Andere Schieber, beispielsweise Einplattenschieber können ebenfalls eingesetzt werden. Der Schieber 13 verschließt die Verkokungstrommel im Betriebszustand. Der Schieber 13 kann auch als Hauptschieber oder Absperrschieber bezeichnet werden.

Der Rohrstutzen 10 weist einen Zufuhranschluss 14 auf, der mit der Wand 17 des Rohrstutzens verbunden ist. Der Zufuhranschluss 14 kann beispielsweise als Düse ausgebildet sein, an die eine Rohrleitung angeschlossen wird. Der Zufuhranschluss 14 dient dazu, das zum Befüllen der Verkokungstrommel vorgesehene Medium in den Rohrstutzen 10 einzuleiten. Als Medium kommen beispielsweise Rohöl oder Reststoffe aus der Vakuumdestillation infrage.

Zwischen dem Zufuhranschluss 14 und dem ersten, oberen Ende 11 des Rohrstutzens 10 ist eine Blende 15 angeordnet. Die Blende 15 überdeckt die gesamte Querschnittsfläche des Rohrstutzens 10.

Die Blende 15 kann in eine Befüllstellung und in eine Entleerungsstelle bewegt werden. In Fig. 1 ist zusätzlich eine dritte Stellung dargestellt, bei der die Blende 15 vollständig geschlossen ist (Schließstellung). In der Befüllstellung ist die Blende teilweise geöffnet und zwar so weit, dass sich eine Blendenöffnung im Bereich der Mittellängsachse L des Rohrstutzens 10 ergibt. Die Blendenöffnung ist so groß, dass das durch den Zufuhranschluss 14 eingeführte Medium in die Verkokungstrommel 21 einströmen kann. Konkret strömt das Medium in einen Raum 18 des Rohrstutzens 10 ein, der zwischen dem Schieber 13 und der Blende 15 im Rohrstutzen 10 ausgebildet ist. Der Zufuhranschluss 14 mündet in diesen Raum 18.

Die Blendenöffnung ist im Bereich der Mittellängsachse L der Verkokungstrommel bzw. des Rohrstutzens 10 positioniert. Dabei kann die Blendenöffnung symmetrisch zur Mittellängsachse L angeordnet sein, sodass diese durch den Mittelpunkt der Blendenöffnung verläuft. Abweichungen von dieser Position sind akzeptabel, solange die er zentrale Zufuhr des Mediums in die Verkokungstrommel 21 ermöglicht wird.

Zum Entleeren der Verkokungstrommel 21 wird die Blende 15 vollständig geöffnet. Die Durchtrittsfläche der Blende ist also in der Entleerungsstelle größer als die Durchtrittsfläche der Blende in der Befüllstellung. In der Entleerungsstelle wird der Rohrstutzen 10 so weit freigegeben, insbesondere vollständig freigegeben, dass das in der Verkokungstrommel 21 befindliche Koks entnommen werden kann. Dazu kann es erforderlich sein, dass ein Schneidwerkzeug in die Ausgangsöffnung der Verkokungstrommel eingeführt wird, was problemlos möglich ist, wenn die Blende 15 vollständig geöffnet ist.

Wie in den Figuren 1 bis 4 gezeigt, ist die Blende 15 als Schieberventil mit einer geteilten Schieberplatte 16 ausgebildet. Die Schieberplatte 16 setzt sich aus wenigstens zwei Teilplatten 16a, 16b zusammen, die in entgegengesetzten Richtungen bewegt werden können. Wie in Fig. 1 gezeigt, werden die Teilplatten 16a, 16b bezogen auf die Mittellängsachse L zum Öffnen der Blende 15 nach radial außen und zum Schließen der Blende 15 radial nach innen bewegt. Für den Befüllvorgang werden die Teilplatten 16a, 16b nicht vollständig geschlossen, wie in Fig. 1 dargestellt, sondern teilweise so geschlossen, dass die Blendenöffnung zwischen den Teilplatten 16a, 16b gebildet wird.

Die Teilplatten 16a, 16b sind so verfahrbar, dass diese in der Befüllstellung die Blendenöffnung im Bereich der Mittellängsachse L bilden, sodass das Medium zentral durch die Blende 15 in die Verkokungstrommel 21 eingeleitet werden kann.

Wie in Figuren 1, 3, 4 gut zu sehen, ist jede Teilplatte 16a, 16b mit einer eigenen Schieberstange 19a, 19b verbunden, um so die Teilplatten 16a, 16b in entgegengesetzte Richtungen aufeinander zu oder voneinander weg bewegen zu können. Die Teilplatten 16a, 16b sind in Gehäuseansätzen 22a, 22b geführt bzw. angeordnet, die radial am Rohrstutzen 10 angeordnet sind. Der erste Gehäuseansatz 22a nimmt die erste Teilplatten 16a (linke Teilplatte in Fig. 1) und der zweite Gehäuseansatz 22b die zweite Teilplatte 16b (rechte Teilplatte in Fig. 1) auf.

Die beiden Teilplatten 16a, 16b bilden jeweils Innenkanten 20. Die Innenkanten 20 begrenzen einerseits die Teilplatten 16a, 16b und andererseits die Blendenöffnung, wenn die Teilplatten 16a, 16b teilweise geöffnet sind.

Für die Ausbildung der Innenplatten 16a, 16b bestehen verschiedene Möglichkeiten.

Die Innenkanten 16a, 16b können gerade ausgebildet sein (in Fig. 1 nicht dargestellt). Bei kreisförmigem Durchmesser bilden die Teilplatten 16a, 16b Halbkreise. Die Innenkanten 16a, 16b verlaufen durch den Mittelpunkt der kreisförmigen geteilten Schieberplatte 16 gemäß Fig. 1. In der in Fig. 1 dargestellten Schließstellung liegen die Innenkanten 20 stumpf aneinander an. Wenn die Innenkanten in der Befüllstellung etwas auseinander gefahren sind, bilden diese eine schlitz- oder spaltförmige Blendenöffnung, deren Breite so bemessen ist, dass ein ausreichend großer Volumenstrom des Mediums zum Befüllen der Verkokungstrommel 21 durch die Blende 15 hindurch treten kann. Die spaltförmige Blendenöffnung ist so positioniert, dass die Mittellängsachse L durch diese hindurch verläuft. Beim Befüllen strömt das Medium durch die spaltförmige Blendenöffnung in die Verkokungstrommel 21.

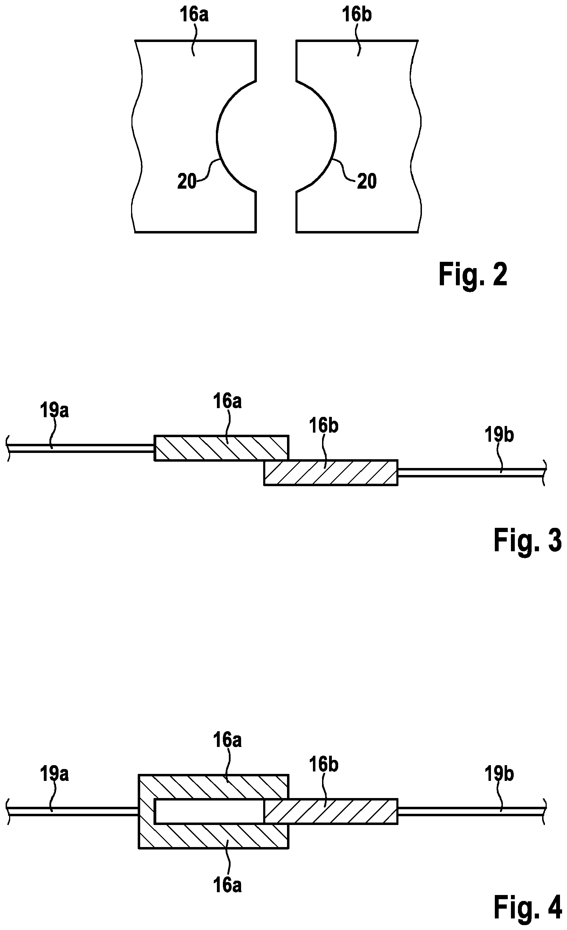

Bei der Variante gemäß Fig. 2 sind die Innenkanten 20 profiliert ausgebildet. Es ist auch möglich, dass eine Innenkante gerade und die andere Innenkante profiliert ausgebildet ist. In der Befüllstellung bilden die Innenkanten 20 eine zumindest abschnittsweise gekrümmte Blendenöffnung. Dazu weisen die beiden Innenkanten 20 konkave Ausnehmungen auf, die symmetrisch angeordnet sind und zusammen die Blendenöffnung bilden.

Fig. 2 zeigt eine Zwischenstellung, bei der die Teilplatten 16a, 16b aus der Befüllstellung in die Entleerungsstelle, also voneinander weg bewegt werden. In der Befüllstellung sind die beiden Teilplatten 16a, 16b so nah beieinander angeordnet, dass die Blendenöffnung durch die beiden Ausnehmungen gebildet ist.

Dies kann dadurch erfolgen, dass die beiden Teilplatten 16a, 16b in unterschiedlichen Ebenen angeordnet sind und somit übereinander bewegt werden können, wie in Fig. 3 dargestellt. Dadurch überlappen die Teilplatten 16a, 16b zumindest an den Rändern teilweise, sodass die Blendenöffnung durch die beiden Ausnehmungen bzw. die profilierten Innenkanten 20 gebildet ist. Die Blendenöffnung ist daher auf dem Umfang vollständig geschlossen, sodass das Medium auf den Bereich um die Mittellängsachse L konzentriert ist.

Die Blendenöffnung ist bei dem Ausflugsbeispiel gemäß Fig. 2 oval. Andere Konturen beispielsweise kreisrunde Blendenöffnungen sind möglich. Die Möglichkeit, die beiden Teilplatten 16a, 16b übereinander und relativ zueinander zu bewegen hat den weiteren Vorteil, dass die Größe der Blendenöffnung variiert werden kann. Damit lässt sich der Volumenstrom durch die Blende in die Verkokungstrommel hinein regeln.

Alternativ zu der Anordnung der beiden Teilplatten 16a, 16b, wie in Fig. 3 gezeigt, ist es auch möglich, eine der beiden Teilplatten 16a, 16b gabelförmigen auszubilden, wie in Fig. 4 gezeigt. Durch die im Querschnitt gabelförmige Ausbildung der beiden Teilplatten 16a, 16b entsteht ein Spalt zwischen den Teilplatten 16a, 16b, in den die andere Teilplatten 16a, 16b einfahren kann, um so die Überlappung der Teilplatten 16a, 16b und damit die Begrenzung und Veränderung der Blendenöffnung zu erreichen.

Zum Entleeren der Verkokungstrommel 21 werden die Teilplatten 16a, 16b vollständig radial nach außen auseinandergefahren, sodass die gesamte Querschnittsfläche des Rohrstutzens freigegeben wird.

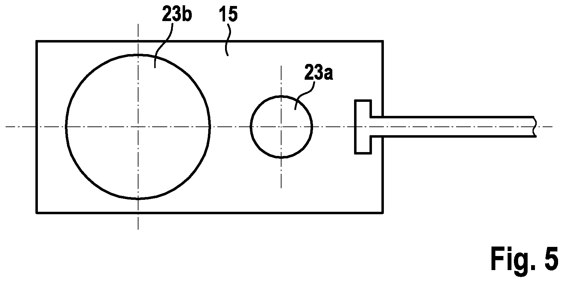

Eine weitere Variante der Blende für das Absperrventil ist in Fig. 5 dargestellt. Im Unterschied zu den vorangegangenen Ausführungsbeispielen ist die Blende 15 als eine durchgängige, d. h. nicht geteilte Platte ausgebildet. Die Änderung der Blendenöffnung wird dadurch ermöglicht, dass die Platte zwei Blendenöffnungen, eine erste Blendenöffnung 23a und eine zweite Blendenöffnung 23b aufweist. Die beiden Blendenöffnungen 23a, 23b sind in Bewegungsrichtung der Platte hintereinander angeordnet. Dadurch wird erreicht, dass entweder die erste oder die zweite Blendenöffnung 23a, 23b in den Rohrstutzen bewegt werden kann und zwar so, dass der Mittelpunkt der jeweiligen Blendenöffnung 23a, 23b in etwa mit der Mittellängsachse L des Rohrstutzens 10 übereinstimmt. Die Blendenöffnungen 23a, 23b sind also koaxial mit dem Rohrstutzen 10 in der jeweiligen Stellung angeordnet. Die kleinere Blendenöffnung 23a wird zum zentralen Befüllen der Verkokungstrommel 21 verwendet. Die größere Blendenöffnung 23b wird zum Entleeren der Verkokungstrommel verwendet. Damit ist eine sehr einfache Möglichkeit geschaffen, einerseits die Befüllung der Verkokungstrommel durch die Mitte des Rohrstutzens zu erreichen und andererseits die Entleerung der Verkokungstrommel durch die Blende nicht zu beeinträchtigen, da zum Entleeren die Blendenöffnung mit dem größeren Durchmesser verwendet wird.
- 10: Rohrstutzen
- 11: erstes Ende
- 12: zweites Ende
- 13: Schieber
- 14: Zufuhranschluss
- 15: Blende
- 16a: erste Teilplatte
- 16b: zweite Teilplatte
- 17: Wand
- 18: Raum des Rohrstutzens
- 19a: erste Schieberstange
- 19b: zweite Schieberstange
- 20: Innenkanten
- 21: Verkokungstrommel
- 22a: erste Gehäuseansatz
- 22b: zweite Gehäuseansatz
- 23a: erste Blendenöffnung
- 23b: zweite Blendenöffnung

## Patentansprüche

1. Absperrventil, insbesondere Rohrbrückenschieber, für eine Verkokungstrommel zur Herstellung von Koks mit einem ersten Verschlussmittel (13) zum Öffnen und Verschließen der Verkokungstrommel und mit wenigstens einem Rohrstutzen (10), der ein erstes Ende (11) zur Verbindung mit der Verkokungstrommel und ein zweites Ende (12) aufweist, an dem das erste Verschlussmittel (13) angeordnet ist, wobei der Rohrstutzen (10) einen Zufuhranschluss (14) zum Befüllen der Verkokungstrommel mit einem Medium und ein zweites Verschlussmittel (15) aufweist, das zwischen dem Zufuhranschluss (14) und dem ersten Ende (11) des Rohrstutzens (10) angeordnet ist und in eine Befüllstellung und in eine Entleerungsstellung bewegbar ist, wobei das erste Verschlussmittel ein Schieber (13) ist und das zweite Verschlussmittel eine Blende (15) ist, wobei in der Befüllstellung eine Blendenöffnung im Bereich der Mittellängsachse L des Rohrstutzens (10) zur zentralen Einleitung des Mediums in die Verkokungstrommel angeordnet ist und in der Entleerungsstellung die Blendenöffnung eine größere Durchtrittsfläche als in der Befüllstellung aufweist.

2. Absperrventil nach Anspruch 1
**dadurch gekennzeichnet, dass**
der Zufuhranschluss (14) in einer Wand (17) des Rohrstutzens (10) angeordnet ist und in einen Raum (18) des Rohrstutzens (10) zwischen dem Schieber (13) und der Blende (15) mündet.

3. Absperrventil nach Anspruch 1 oder 2
**dadurch gekennzeichnet, dass**
die Blende (15) ein Schieberventil mit einer geteilten Schieberplatte (16) umfasst, deren Teilplatten (16a, 16b) in entgegengesetzte Richtungen bewegbar sind und in der Befüllstellung die Blendenöffnung im Bereich der Mittellängsachse L zur zentralen Einleitung des Mediums in die Verkokungstrommel bilden.

4. Absperrventil nach Anspruch 3
**dadurch gekennzeichnet, dass**
jede Teilplatte (16a, 16b) mit einer Schieberstange (19a, 19b) verbunden ist, um die Teilplatten (16a, 16b) in entgegengesetzte Richtungen zu bewegen.

5. Absperrventil nach Anspruch 3 oder 4
**dadurch gekennzeichnet, dass**
die Teilplatten (16a, 16b) Innenkanten (20) aufweisen, die in der Befüllstellung die Blendenöffnung bilden.

6. Absperrventil nach Anspruch 5
**dadurch gekennzeichnet, dass**
die Innenkanten (20) gerade ausgebildet sind und in der Befüllstellung eine spaltförmige Blendenöffnung bilden.

7. Absperrventil nach Anspruch 5
**dadurch gekennzeichnet, dass**
wenigstens eine der Innenkanten (20), insbesondere beide Innenkanten (20) profiliert ausgebildet sind und in der Befüllstellung eine zumindest abschnittsweise gekrümmte Blendenöffnung bilden.

8. Absperrventil nach Anspruch 7
**dadurch gekennzeichnet, dass**
die Blendenöffnung in der Befüllstellung einen geschlossenen Umfang bildet.

9. Absperrventil nach Anspruch 7 oder 8
**dadurch gekennzeichnet, dass**
wenigstens eine, insbesondere beide Innenkanten (20) jeweils eine konkave Ausnehmung bilden.

10. Absperrventil nach einem der Ansprüche 7 bis 9
**dadurch gekennzeichnet, dass**
die Teilplatten (16a, 16b) im Bereich der Innenkanten (20) übereinander bewegbar sind.

11. Absperrventil nach einem der vorhergehenden Ansprüche
**dadurch gekennzeichnet, dass**
der Volumenstrom des Mediums beim Befüllen der Verkokungstrommel durch Verändern der Blendenöffnung regelbar ist.

12. Absperrventil nach einem der vorhergehenden Ansprüche
**dadurch gekennzeichnet, dass**
die Durchtrittsfläche der Blendenöffnung beim Entleeren der Verkokungstrommel im Wesentlichen der Durchtrittsfläche des Rohrstutzens entspricht.

13. Absperrventil nach einem der Ansprüche 1, 2 oder 12
**dadurch gekennzeichnet, dass**
die Blende (15) eine Platte mit wenigstens einer ersten und zweiten Blendenöffnung (23a, 23b) bildet, die in die Befüllstellung und in die Entleerungsstellung bewegbar ist, wobei in der Befüllstellung die erste BlendenÖffnung (23a) im Bereich der Mittellängsachse L des Rohrstutzens (10) zur zentralen Einleitung des Mediums in die Verkokungstrommel (21) angeordnet ist und in der Entleerungsstellung die zweite Blendenöffnung (23b) im Bereich der Mittellängsachse L des Rohrstutzens (10) zur Entleerung der Verkokungstrommel (21) angeordnet ist, die eine größere Durchtrittsfläche als die erste Blendenöffnung (23a) aufweist.

14. Verkokungstrommel mit einem Absperrventil nach einem der vorhergehenden Ansprüche.

15. Verfahren zur Herstellung von Koks in einer Verkokungstrommel, die mit einem Absperrventil nach einem der Ansprüche 1 bis 13 verbunden ist, bei dem zum Befüllen der Verkokungstrommel mit einem Medium die Blende (15) in die Befüllstellung bewegt und durch den Zufuhranschluss (14) das Medium in den Rohrstutzen (10) und durch die Blende (15) in die Verkokungstrommel zentral bezogen auf die Verkokungstrommel eingespeist wird.

16. Verfahren nach Anspruch 15
**dadurch gekennzeichnet, dass**
der Volumenstrom des Mediums in die Verkokungstrommel durch die Blende verändert wird.

17. Verfahren nach Anspruch 15 oder 16
**dadurch gekennzeichnet, dass**
die Blende (15) zum Entleeren der Verkokungstrommel in die Entleerungsstellung bewegt wird.

## Claims

1. A shut-off valve, in particular a pipe bridge slide valve, for a carbonisation drum for producing coke, comprising a first closure means (13) for opening and closing the carbonisation drum and comprising at least one pipe socket (10), which has a first end (11) for connection to the carbonisation drum and a second end (12) on which the first closure means (13) is arranged, wherein the pipe socket (10) has a supply connection (14) for filling the carbonisation drum with a medium and a second closure means (15), which is arranged between the supply connection (14) and the first end (11) of the pipe socket (10) and is movable into a filling position and into an emptying position, wherein the first closure means is a slider (13) and the second closure means is a diaphragm (15), wherein in the filling position a diaphragm opening is arranged in the region of the central longitudinal axis L of the pipe socket (10) for introducing the medium centrally into the carbonisation drum, and in the emptying position the diaphragm opening has a larger passage area than in the filling position.

2. The shut-off valve according to claim 1,
**characterised in that**
the supply connection (14) is arranged in a wall (17) of the pipe socket (10) and opens out into a space (18) of the pipe socket (10) between the slider (13) and the diaphragm (15).

3. The shut-off valve according to claim 1 or 2,
**characterised in that**
the diaphragm (15) comprises a slide valve with a split slide plate (16), of which partial plates (16a, 16b) are movable in opposite directions and in the filling position form the diaphragm opening in the region of the central longitudinal axis L for introducing the medium centrally into the carbonisation drum.

4. The shut-off valve according to claim 3,
**characterised in that**
each partial plate (16a, 16b) is connected to a slide rod (19a, 19b) to move the partial plates (16a, 16b) in opposite directions.

5. The shut-off valve according to claim 3 or 4,
**characterised in that**
the partial plates (16a, 16b) have inner edges (20), which form the diaphragm opening in the filling position.

6. The shut-off valve according to claim 5,
**characterised in that**
the inner edges (20) are straight and form a gap-like diaphragm opening in the filling position.

7. The shut-off valve according to claim 5,
**characterised in that**
at least one of the inner edges (20), in particular both inner edges (20), are profiled and, in the filling position, form a diaphragm opening which is curved at least in some portions.

8. The shut-off valve according to claim 7,
**characterised in that**
the diaphragm opening forms a closed circumference in the filling position.

9. The shut-off valve according to claim 7 or 8,
**characterised in that**
at least one, in particular both, of the inner edges (20) in each case forms a concave recess.

10. The shut-off valve according to any one of claims 7 to 9,
**characterised in that**
the partial plates (16a, 16b) are movable over each other in the region of the inner edges (20).

11. The shut-off valve according to any one of the preceding claims,
**characterised in that**
the volume flow of the medium when filling the carbonisation drum is controllable by changing the diaphragm opening.

12. The shut-off valve according to any one of the preceding claims,
**characterised in that**
the passage area of the diaphragm opening when emptying the carbonisation drum corresponds substantially to the passage area of the pipe socket.

13. The shut-off valve according to any one of claims 1, 2 or 12,
**characterised in that**
the diaphragm (15) forms a plate which has at least a first and second diaphragm opening (23a, 23b) and which is movable into the filling position and into the emptying position, wherein, in the filling position, the first diaphragm opening (23a) is arranged in the region of the central longitudinal axis L of the pipe socket (10) for introducing the medium centrally into the carbonisation drum (21) and, in the emptying position, the second diaphragm opening (23b) is arranged in the region of the central longitudinal axis L of the pipe socket (10) for emptying the carbonisation drum (21) and has a larger passage area than the first diaphragm opening (23a).

14. A carbonisation drum having a shut-off valve according to any one of the preceding claims.

15. A method for producing coke in a carbonisation drum which is connected to a shut-off valve according to any one of claims 1 to 13, in which the diaphragm (15) is moved into the filling position for filling the carbonisation drum with a medium and the medium is fed through the supply connection (14) into the pipe socket (10) and through the diaphragm (15) into the carbonisation drum centrally with respect to the carbonisation drum.

16. The method according to claim 15,
**characterised in that**
the volume flow of the medium into the carbonisation drum is changed by the diaphragm.

17. The method according to claim 15 or 16,
**characterised in that**
the diaphragm (15) is moved into the emptying position for emptying the carbonisation drum.

## Revendications

1. Vanne d'arrêt, notamment robinet-vanne pourvu d'un pont tubulaire, destinée à un tambour de cokéfaction voué à la production de coke, pourvue d'un premier moyen de fermeture (13), destiné à ouvrir et à fermer le tambour de cokéfaction et pourvue d'au moins une tubulure (10), qui comporte une première extrémité (11) destinée à être assemblée avec le tambour de cokéfaction et une deuxième extrémité (12), sur laquelle est placé le premier moyen de fermeture (13), la tubulure (10) comportant un raccord d'alimentation (14) destiné au remplissage du tambour de cokéfaction avec un milieu et un deuxième moyen de fermeture (15), qui est placé entre le raccord d'alimentation (14) et la première extrémité (11) de la tubulure (10) et qui est déplaçable dans une position de remplissage et dans une position de vidage, le premier moyen de fermeture étant un coulisseau (13) et le deuxième moyen de fermeture étant un obturateur (15), dans la position de remplissage, une ouverture de l'obturateur étant placée dans la zone de l'axe longitudinal médian L de la tubulure (10), pour l'introduction centrale du milieu dans le tambour de cokéfaction et dans la position de vidage, l'ouverture de l'obturateur présentant une surface de passage supérieure à celle dans la position de remplissage.

2. Vanne d'arrêt selon la revendication 1,
**caractérisée en ce que**
le raccord d'alimentation (14) est placé dans une paroi (17) de la tubulure (10) et débouche dans un espace (18) de la tubulure (10), entre le coulisseau (13) et l'obturateur (15).

3. Vanne d'arrêt selon la revendication 1 ou 2,
**caractérisée en ce que**
l'obturateur (15) comprend une vanne à plaque avec une plaque de vanne (16) divisée, dont les plaques partielles (16a, 16b) sont déplaçables dans des directions opposées et dans la position de remplissage, constituent l'ouverture de l'obturateur dans la zone de l'axe longitudinal médian L, pour l'introduction centrale du milieu dans le tambour de cokéfaction.

4. Vanne d'arrêt selon la revendication 3,
**caractérisée en ce que**
chaque plaque partielle (16a, 16b) est reliée avec une tige de coulisseau (19a, 19b), pour déplacer les plaques partielles (16a, 16b) dans des directions opposées.

5. Vanne d'arrêt selon la revendication 3 ou 4,
**caractérisée en ce que**
les plaques partielles (16a, 16b) comportent des arêtes internes (20), qui dans la position de remplissage, constituent l'ouverture de l'obturateur.

6. Vanne d'arrêt selon la revendication 5,
**caractérisée en ce que**
les arêtes internes (20) sont conçues de forme rectiligne et dans la position de remplissage, constituent une ouverture de l'obturateur en forme fente.

7. Vanne d'arrêt selon la revendication 5,
**caractérisée**
**en ce qu'**au moins l'une des arêtes internes (20), notamment les deux arêtes internes (20) sont conçues de forme profilée et dans la position de remplissage, constituent une ouverture de l'obturateur incurvée au moins par endroit.

8. Vanne d'arrêt selon la revendication 7,
**caractérisée en ce que**
dans la position de remplissage, l'ouverture de l'obturateur constitue un périmètre fermé.

9. Vanne d'arrêt selon la revendication 7 ou 8,
**caractérisée**
**en ce qu'**au moins l'une, notamment les deux arêtes internes (20) constituent chacune un évidement concave.

10. Vanne d'arrêt selon l'une quelconque des revendications 7 à 9,
**caractérisée en ce que**
dans la zone des arêtes internes (20), les plaques partielles (16a, 16b) sont déplaçables en superposition.

11. Vanne d'arrêt selon l'une quelconque des revendications précédentes,
**caractérisée en ce que**
le débit volumétrique du milieu lors du remplissage du tambour de cokéfaction est réglable par variation de l'ouverture de l'obturateur.

12. Vanne d'arrêt selon l'une quelconque des revendications précédentes,
**caractérisée en ce que**
lors du vidage du tambour de cokéfaction, la surface de passage de l'ouverture de l'obturateur correspond sensiblement à la surface de passage de la tubulure.

13. Vanne d'arrêt selon l'une quelconque des revendications 1, 2 ou 12,
**caractérisée en ce que**
l'obturateur (15) constitue une plaque, pourvue d'au moins une première et une deuxième ouverture de l'obturateur (23a, 23b), qui est déplaçable dans la position de remplissage et dans la position de vidage, dans la position de remplissage, la première ouverture de l'obturateur (23a) étant placée dans la zone de l'axe longitudinal médian L de la tubulure (10), pour l'introduction centrale du milieu dans le tambour de cokéfaction (21) et dans la position de vidage, la deuxième ouverture de l'obturateur (23b) qui présente une surface de passage supérieure à celle de la première ouverture de l'obturateur (23a) étant placée dans la zone de l'axe longitudinal médian L de la tubulure (10), pour vider le tambour de cokéfaction (21) .

14. Tambour de cokéfaction pourvu d'une vanne d'arrêt selon l'une quelconque des revendications précédentes.

15. Procédé, destiné à fabriquer du coke dans un tambour de cokéfaction, qui est relié avec une vanne d'arrêt selon l'une quelconque des revendications 1 à 13, lors duquel, pour remplir le tambour de cokéfaction avec un milieu, l'on déplace l'obturateur (15) dans la position de remplissage et à travers le raccord d'alimentation (14), l'on alimente le milieu dans la tubulure (10) et à travers l'obturateur (15) de manière centrale en rapport au tambour de cokéfaction dans le tambour de cokéfaction.

16. Procédé selon la revendication 15,
**caractérisé en ce que**
l'on fait varier le débit volumétrique du milieu dans le tambour de cokéfaction à l'aide de l'obturateur.

17. Procédé selon la revendication 15 ou 16,
**caractérisé en ce que**
l'on déplace l'obturateur (15) dans la position de vidage, pour vider le tambour de cokéfaction.
